# EUROPÄISCHE PATENTSCHRIFT

(11) **EP 1 430 586 B1**
(45) Veröffentlichungstag und Bekanntmachung des Hinweises auf die Patenterteilung: **17.02.2010**
(21) Anmeldenummer: 02774317.8
(22) Anmeldetag: 10.09.2002
(51) Int. Cl.: H02K 13/10, H01R 39/24, H02K 23/66, H01R 39/26, H01R 39/39, H01R 39/40, H02K 13/00, H01R 39/38

(54) **KOMMUTIERUNGSVORRICHTUNG FÜR EINE ELEKTRISCHE MASCHINE**
COMMUTATION DEVICE FOR AN ELECTRICAL MACHINE
DISPOSITIF DE COMMUTATION POUR UNE MACHINE ELECTRIQUE

(30) Priorität: 21.09.2001 DE 10146569
(43) Veröffentlichungstag der Anmeldung: 23.06.2004
(73) Patentinhaber: ROBERT BOSCH GMBH, 70442 Stuttgart (DE)
(72) Erfinder: WEHRLE, Andreas, 77652 Offenburg (DE)
(86) Internationale Anmeldenummer: PCT/DE2002/003357
(87) Internationale Veröffentlichungsnummer: WO 2003/028190

(56) Entgegenhaltungen:
- EP-A- 0 540 306
- DE-A- 4 438 868
- GB-A- 2 244 603
- US-A- 5 773 907
- US-B1- 6 288 468
- PATENT ABSTRACTS OF JAPAN vol. 1995, no. 04, 31. Mai 1995 (1995-05-31) & JP 07 031101 A (ASMO CO LTD), 31. Januar 1995 (1995-01-31)
- PATENT ABSTRACTS OF JAPAN vol. 012, no. 457 (E-688), 30. November 1988 (1988-11-30) & JP 63 181648 A (NIPPON DENSO CO LTD), 26. Juli 1988 (1988-07-26)
- PATENT ABSTRACTS OF JAPAN vol. 2000, no. 25, 12. April 2001 (2001-04-12) & JP 2001 231219 A (ASMO CO LTD), 24. August 2001 (2001-08-24)

## Beschreibung

### Stand der Technik

Die Erfindung geht aus von einer Kommutierungsvorrichtung für eine elektrische Maschine, insbesondere für einen Gleichstrommotor in Kraftfahrzeugen, nach dem Oberbegriff des Anspruchs 1.

Bei einer bekannten Kommutierungsvorrichtung für einen elektrischen Gleichstrommotor (DE 85 74 879 U1) sind zur Reduzierung des Bürstenverschleisses aufgrund verstärkt auftretenden Bürstenfeuers bei Schüttelbelastung des Gleichstrommotors die beiden separaten Bürstenkörper jeder Bürste, die durch die elektrische Verbindung untereinander gleiche Polarität aufweisen, am Kommutator in Richtung der Kommutatorachse gesehen hinter- oder nebeneinander angeordnet und in Drehrichtung des Kommutators so geneigt, daß die Längsachsen der beiden Bürstenkörper eine Winkel von mindestens 20° einschließen. Durch diese konstruktive Maßnahme wird bei extremer Schüttelbelastung zwar ein Bürstenkörper von dem Kollektor- oder Kommutatorbelag abgehoben, doch der andere Bürstenkörper um so stärker auf den Kommutatorbelag aufgepreßt, so daß das Bürstenfeuer auf das übliche Maß reduziert bleibt.

Die Bürstenkörper liegen üblicherweise in räumlich feststehenden Köchern eines Bürstenträgers ein und werden mittels einer Bürstenandruckfeder, die den Bürstenkörper mit einer in Längsrichtung des Bürstenkörpers gerichteten Federkraft beaufschlagt, mit ihrer kommutatorseitigen Stirnseite auf den von den Kommutatorlamellen gebildeten Kommutator aufgedrückt. Durch Führungsspiel der Bürstenkörper in den Köchern und dem Wechsel der Anlagefläche im Köcher bei Drehrichtungsumkehr des Kommutators wird dabei die für den Stromfluß zwischen Bürstenkörper und Kommutatorbelag relevante Kontaktfläche an der Stirnseite des Bürstenkörper nicht über die ganze, in Drehrichtung des Kommutators gesehene Breite des Bürstenkörpers umgesetzt, sondern ist in ihrer in Drehrichtung gesehenen Breitenabmessung deutlich kleiner. Dadurch wird nicht nur der Übergangswiderstand zwischen Kommutatorbelag und Bürstenkörper vergrößert, sondern es findet vor allem eine Verschiebung-der Stromphasenlage statt, die sich bei in inversen Drehrichtungen betriebenen Gleichstrommotoren bei jeder Drehrichtungsumkehr ändert.

Aus der DE 44 38 868 geht hervor, die Kohlebürsten eines Gleichstommotors zur Verringerung von Stromripple im analogen Verlauf des Kommutierungsstroms derart zu gestalten, dass zwei möglichst weit auseinander liegende, im Wesentlichen linienförmige Auflageflächen zwischen der Kohlebürste und den kontaktierten Kommutatorlamellen vorhanden sind. Dazu ist eine Ausführungsform angegeben, in der die Kohlebürste aus zwei Teilen besteht, die im Umfangsrichtung des Kommutators aneinder liegen und in Achsrichtung gegeneinander verscheibbar sind.

Gemäß der JP 7 031 101 ist es bekannt, zwei in Drehrichtung des Kommutators hintereinander angeordnete, axial gegeneinander verschiebbare Bürstenträger zu verwenden, bei denen die Schwerpunkte der Kotaktflächen in Umfangsrichtung des Kommutators gesehen, relativ zueinander versetzt sind.

### Vorteile der Erfindung

Die erfindungsgemäße Kommutierungsvorrichtung mit den Merkmalen des Anspruchs 1 hat den Vorteil, daß durch die erfindungsgemäße Anordnung der beiden Bürstenkörper einer Bürste das einmal festgelegte Verhältnis zwischen der Kommutatorlamellenbreite und der Breite der Kontaktfläche der Bürste bei wechselndem Rechts- und Linkslauf der Maschine weitgehend konstant bleibt, so daß bei Drehrichtungsumkehr keine oder nur eine minimale Phasenverschiebung der Kommutierung auftritt. Zudem wird durch die beiden Kontaktflächen der Bürste mit dem Drehwinkelversatz ihrer Flächenschwerpunkte ein Kommutierungsbereich erreicht, der größer ist als der Kommutierungsbereich einer nur einen einzigen Bürstenkörper aufweisenden Bürste, bei der das gleiche Verhältnis von Bürstenbreite und Kommutatorlamellenbreite besteht wie bei der erfindungsgemäßen Kommutierungsvorrichtung. Darüber hinaus haben die massekleineren Bürstenkörper einen positiven Einfluß auf das Masseschwingsystem, was zusätzlich zu einer gleichmäßigeren Kommutierung-beiträgt.

Durch die in den weiteren Ansprüchen aufgeführten Maßnahmen sind vorteilhafte Weiterbildungen und Verbesserungen der im Anspruch 1 angegebenen Kommutierungsvorrichtung möglich.

Gemäß alternativen Ausführungsformen der Erfindung können die Bürstenkörper so angeordnet sein, daß die Kontaktflächen in Drehrichtung des Kommutators fluchten und parallel zueinander ausgerichtet sind. Die üblicherweise in einem Köcher geführten Bürstenkörper können dabei so ausgerichtet werden, daß ihre Längsachsen parallel zueinander verlaufen oder einen spitzen Winkel einschließen.

### Zeichnung

Die Erfindung ist anhand von in der Zeichnung dargestellten Ausführungsbeispielen in der nachfolgenden Beschreibung näher erläutert. Es zeigen in schematisierter Darstellung:
- Fig. 1: ausschnittweise eine Draufsicht einer Kommutierungsvorrichtung für einen elektrischen Gleichstrommotor mit Kommutator und einer Bürste,
- Fig. 2: einen Schnitt längs der Linie II - II in Fig. 1
- Fig. 3: eine Unteransicht der Bürste mit Bürstenhalter der Kommutierungsvorrichtung in Fig. 1 mit schematisch eingezeichneten, bei Rechtslauf des Kommutators sich ausbildenden Kontaktflächen am Stirnende der Bürstenkörper der Bürste,
- Fig. 4: eine gleiche Darstellung wie in Fig. 3 bei Linkslauf des Kommutators,
- Fig. 5: ausschnittweise eine Draufsicht einer Kommutierungsvorrichtung gemäß einem weiteren Ausführungsbeispiel,
- Fig. 6: eine Unteransicht der Bürste der Kommutierungsvorrichtung in Fig. 5 mit sich bei Rechtslauf des Kommutators ausbildenden Kontaktflächen an den Stirnenden der Bürstenkörper der Bürste,
- Fig. 9 und 10: jeweils eine Draufsicht sich ausbildender Kontaktflächen einer Bürste bei vier verschiedenen Ausgestaltungen der Bürstenkörper.

### Beschreibung der Ausführungsbeispiele

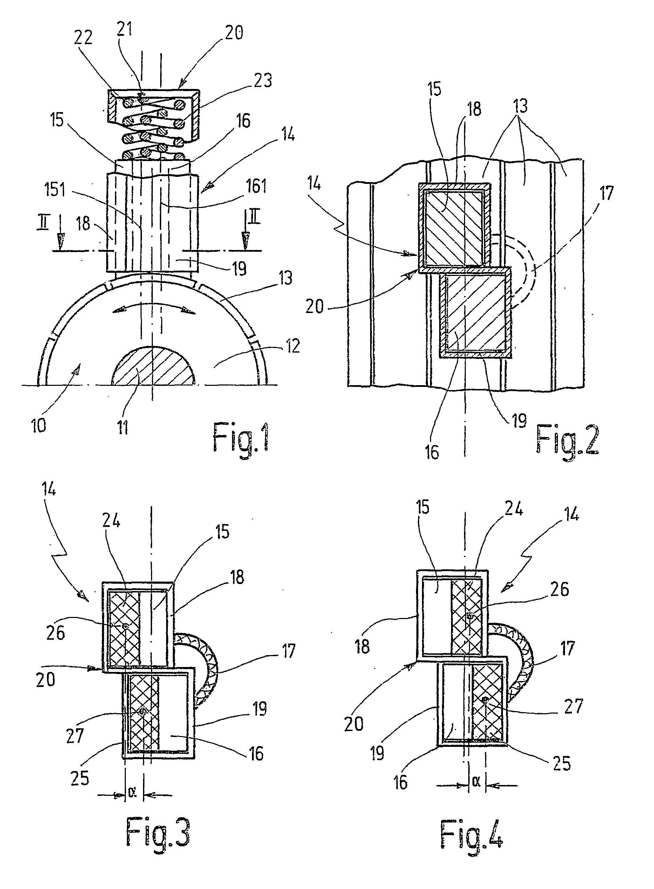

Die in Fig. 1 nur ausschnittweise in Draufsicht dargestellte Kommutierungsvorrichtung für einen Gleichstrommotor, der beispielsweise als Antriebsmotor für die elektrische Sitzverstellung oder Fensterbetätigung in Kraftfahrzeugen verwendet wird, als Ausführungsbeispiel für eine allgemeine elektrische Kommutatormaschine, weist einen Stromwender, Kollektor oder Kommutator 10 auf, der zusammen mit einem Anker oder Rotor des Gleichstrommotors drehfest auf einer Anker- oder Motorwelle 11 sitzt. Der Kommutator 10 besteht in bekannter Weise aus einem Kommutatorkörper 12 und aus einer größeren Anzahl von Kommutatorlamellen 13, die in Umfangsrichtung des Kommutatorkörpers 12 gegeneinander isoliert nebeneinanderliegen und den sog. Stromwender- oder Kommutatorbelag bilden. Die Kommutatorlamellen 13 sind mit den einzelnen Wicklungen einer im Anker des Gleichstrommotors angeordneten Ankerwicklung verbunden. Zur Kommutierungsvorrichtung gehören ferner mindestens zwei feststehende, am Kommutator 10 im wesentlichen diametral anliegende Stromwender-, Kollektor-, Kohle- oder Kommutatorbürsten, im folgenden kurz Bürsten 14, genannt von denen in Fig. 1 und 2 nur eine Bürste 14 dargestellt ist. Die Anzahl der jeweils paarweise einander diametral gegenüberliegenden Bürsten 14 ist bestimmt durch die Polzahl der Ankerwicklung und kann ein Vielfaches von Zwei betragen. Jede Bürste 14 weist zwei eigenständige Bürstenkörper 15, 16 auf, die elektrisch-leitend miteinander verbunden sind, z.B. durch eine in Fig. 2 strichliniert eingezeichnete Verbindungslitze 17. Jeder Bürstenkörper 15 bzw. 16 ist in einem Köcher 18 bzw. 19 geführt. Im Ausführungsbeispiels der Fig. 1 und 2 sind die beiden Köcher 18, 19 zu einem gemeinsamen Bürstenhalter 20 zusammengefaßt und durch S- und U-förmige Abwinklungen von Blechabschnitten aus einer Blechplatine geformt. Stirnseitig ist der Bürstenhalter 20 mit einem Andruckglied 21, z.B. einen Deckel, verschlossen, und zwischen Andruckglied 21 und Bürstenkörper 15 bzw. 16 ist eine Bürstenandruckfeder 22 bzw. 23 eingelegt, unter deren Federkraft der jeweilige Bürstenkörper 15, 16 über den kommutatorseitigen Köcherrand der Köcher 18, 19 ausgeschoben und mit seiner kommutatorseitigen Stirnseite auf die Kommutatorlamellen 13 aufgedrückt wird. Der Bürstenhalter 20 mit den Köchern 18, 19 ist radial zur Kommutatorachse ausgerichtet und die Köcher 18, 19 sind so ausgebildet, daß die Längsachsen 151, 161 der darin axial verschieblich aufgenommenen Bürstenkörper 15, 16 zueinander parallel verlaufen. Durch das Führungsspiel der Bürstenkörper 15, 16 in den Köchern 18, 19 liegen die Bürstenkörper 15, 16 nicht mit ihrer gesamten Stirnfläche auf den Kommutatorlamellen 13 auf, sondern es bilden sich bei rotierendem Kommutator 10 an den Stirnenden der Bürstenkörper 15, 16 elektrische Kontaktfläche 24, 25 für den Stromfluß zwischen den Bürstenkörper 15, 16 und den Kommutatorlamellen 13. Diese in Fig. 3 und 4 durch Kreuzschraffur kenntlich gemachten Kontaktflächen 24, 25 verlagern sich bei Drehrichtungsumkehr des Kommutators 10. Die sich an den Bürstenkörpern 15, 16 ausbildenden Kontaktfläche 24, 25 sind in Fig. 3 für den Rechtslauf und in Fig. 4 für den Linkslauf des Kommutators 10, also bezüglich Fig. 1 für die Drehrichtung im Uhrzeigersinn und entgegen Uhrzeigersinn, dargestellt.

Um in beiden Drehrichtungen des Kommutators 10 ein gleiches Verhältnis zwischen der Breite der Kontaktflächen 24, 25 und der Breite der Kommutatorlamellen 13, beides in Umfangsrichtung des Kommutators 10 gesehen, zu erhalten, sind durch entsprechende Anordnung der Köcher 18. 19 die Bürstenkörper 15, 16 so angeordnet, daß die Flächenschwerpunkte 26, 27 ihrer beiden Kontaktflächen 24, 25 in Dreh- oder Umfangsrichtung des Kommutators 10 relativ zueinander um einen Drehwinkel α (Fig. 3 und 4) versetzt sind. Infolge dieses Versatzes wird auch der Kommutierungsbereich, der sich von der auflaufenden Kante des einen Bürstenkörpers 15 bzw. 16 bis zur ablaufenden Kante des anderen Bürstenkörpers 16 bzw. 15 erstreckt, in beiden Drehrichtungen des Kommutators 10 annähernd konstant gehalten und gegenüber einer herkömmlichen Bürste mit nur einem Bürstenkörper, die ein gleiches Verhältnis zwischen der Bürstenbreite und der Kommutatorlamellenbreite aufweist, wesentlich vergrößert.

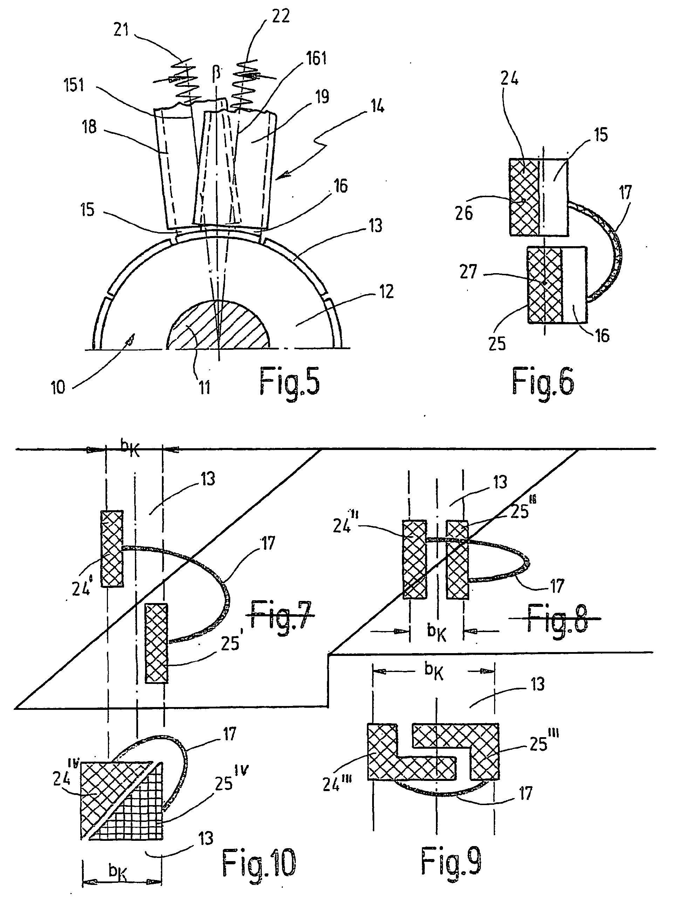

Bei der Bürste 14 gemäß Fig. 1 - 4 sind die Bürstenkörper 15, 16 in Achsrichtung des Kommutators 10 nebeneinander angeordnet, und zwar so, daß die Kontaktflächen 24, 25 mit ihren um den Drehwinkel α versetzten Flächenschwerpunkten 26, 27 sich in Drehrichtung des Kommutators 10 überlappen. In Fig. 9 ist ein weiteres Beispiel für die Lage der Kontaktflächen bei modifizierter Anordnung und Ausbildung der Bürstenkörper 15, 16 dargestellt.

Im Ausführungsbeispiel der Fig. 9 liegen die Kontaktflächen 24"' und 25"' in Drehrichtung des Kommutators 10 fluchtend hintereinander. Durch entsprechende Formgebung der Bürstenkörper weisen die Kontaktflächen 24"' und 25"' L- oder Winkelform mit einem kurzen Winkelschenkel und einem langen Winkelschenkel auf, wobei die langen Winkelschenkel sich parallel zueinander in Umfangsrichtung des Kommutators 10 erstrecken und mit Abstand vor dem jeweils anderen kurzen Winkelschenkel enden.

Im Ausführungsbeispiel der Fig. 10 sind die durch entsprechende Formgebung der Bürstenkörper als Prismen mit einem Querschnitt in Form eines rechtwinkligen Dreiecks dreieckigen Kontaktflächen 24" und 25^{IV} so ausgerichtet, daß jeweils parallele Katheten der beiden Kontaktflächen 24^{IV} und 25^{IV} sich einmal in und einmal quer zur Drehrichtung des Kommutators erstrecken und die Hypothenusen der Kontaktflächen 24^{IV} und 25^{IV} mit geringem Abstand parallel zueinander verlaufen. Die beiden Bürstenkörper sind wiederum über die Verbindungslitze 17 elastisch leitend miteinander verbunden, und die Breite der aus den Bürstenkörpern zusammengesetzten Bürste ist kleiner als die Breite bₖ der Kommutatorlamellen 13.

Bei der Gestaltung der Kontaktflächen 24"' und 25"' gemäß Fig. 9 wird eine kurze axiale Baulänge der Bürste 14 erzielt, wobei allerdings die Fertigung der Bürstenkörper 15, 16 und Köcher 18, 19 relativ aufwendig ist. Bei der Bürstenausbildung gemäß Fig. 1 - 4 erhält man dagegen einen geringen Bürstenverschleiß, ein geringes Reibmoment und vermeidet innenliegendes Bürstenfeuer.

Das Ausführungsbeispiel der Kommutierungsvorrichtung gemäß Fig. 5 und 6 ist gegenüber der zu Fig. 1 - 4 beschriebenen Kommutierungsvorrichtung nur insoweit modifiziert, als die Längsachsen 151 und 161 der Bürstenkörper 15, 16 nicht parallel zueinander ausgerichtet sind, sondern durch radiale Ausrichtung der Bürstenkörper 15, 16 einen kleinen spitzen Winkel β einschließen. Wie aus Fig. 6 ersichtlich ist, bilden sich an den Stirnenden der Bürstenkörper 15, 16 etwa gleich große Kontaktflächen 24, 25 aus wie bei den parallel zueinander ausgerichteten Bürstenkörpern 15, 16 in Fig. 1 - 4.

## Patentansprüche

1. Kommutierungsvorrichtung für eine elektrische Maschine, insbesondere für einen Gleichstrommotor in Kraftfahrzeugen, mit einem Kommutator (10), der einen Kommutatorbelag aus einer Vielzahl von in Umfangsrichtung isoliert aneinandergereihten Kommutatorlamellen (13) aufweist, und mit mindestens zwei am Kommutator (10) im wesentlichen diametral angeordneten Bürsten (14), von denen jede aus zwei eigenständigen, elektrisch leitend miteinander verbundenen Bürstenkörpern (15, 16) besteht, die an ihren kommutatorseitigen Stirnenden kraftschlüssig auf den Kommutatorlamellen (13) aufliegende Kontaktflächen (24, 25; 24"', 25"'; 24^{IV}, 25^{IV}) für den Stromfluss zwischen Bürstenkörper (15, 16) und Kommutatorlamellen (13) ausbilden, **dadurch gekennzeichnet, dass** die Bürstenkörper (15, 16) so angeordnet sind, dass die Flächenschwerpunkte (26, 27) ihrer beiden Kontaktflächen (24, 25; 24"', 25"'; 24^{IV}, 25^{IV}) sowohl in Umfangsrichtung als auch in Achsrichtung des Kommutators (10) relativ zueinander versetzt sind, wobei sich die Kontaktflächen (24, 25) in Umfangsrichtung des Kommutators (10) einander überlappen.

2. Kommutierungsvorrichtung nach Anspruch 1, **dadurch gekennzeichnet, daß** die Bürstenkörper (15, 16) so angeordnet sind, daß ihre Kontaktflächen (24"', 25"'; 24^{IV}, 25^{IV}) in Umfangsrichtung des Kommutators (10) im Abstand aufeinanderfolgen.

3. Kommutierungsvorrichtung nach Anspruch 2, **dadurch gekennzeichnet, daß** die Bürstenkörper (15, 16) so angeordnet sind, daß ihre in Umfangsrichtung des Kommutators (10) aufeinanderfolgenden Kontaktflächen (24"', 25"'; 24^{IV}, 25^{IV}) miteinander fluchten.

4. Kommutierungsvorrichtung nach einem der Ansprüche 1 - 3, **dadurch gekennzeichnet, daß** die Bürstenkörper (15, 16) durch eine elektrisch leitende Litze (17) miteinander verbunden sind.

5. Kommutierungsvorrichtung nach einem der Ansprüche 1 - 4
**dadurch gekennzeichnet, daß** die Bürstenkörper (15, 16) so angeordnet sind, daß ihre Längsachsen (151, 161) parallel zueinander verlaufen.

6. Kommutierungsvorrichtung nach einem der Ansprüche 1 - 4, **dadurch gekennzeichnet, daß** die Bürstenkörper (15, 16) so angeordnet sind, daß ihre Längsachsen (151, 161) radial zur Kommutatorachse ausgerichtet sind und einen spitzen Winkel (β) miteinander einschließen.

7. Kommutierungsvorrichtung nach einem der Ansprüche 1 - 6, **dadurch gekennzeichnet, daß** jeder Bürstenkörper (15, 16) in einem Köcher (18, 19) längsverschieblich geführt ist und an seiner vom Kommutator (10) abgekehrten Stirnseite von einer Bürstenandruckfeder (22, 23) mit zum Kommutator (10) hin gerichteter Federkraft beaufschlagt ist.

8. Kommutierungsvorrichtung nach einem der Ansprüche 1 - 7, **dadurch gekennzeichnet, daß** die Bürstenkörper (15, 16) im Querschnitt so gestaltet sind, daß die sich an ihren kommutatorseitigen Stirnenden ausbildenden Kontaktflächen (24, 25) Rechteckform mit zur Kommutatorachse parallelen Längskanten aufweisen.

9. Kommutierungsvorrichtung nach einem der Ansprüche 1 - 7, **dadurch gekennzeichnet, daß** die Bürstenkörper (15, 16) im Querschnitt so gestaltet sind, daß die sich an ihren kommutatorseitigen Stirnenden ausbildenden Kontaktflächen (24"', 25"') L- oder Winkelform mit zwei Schenken aufweisen, daß die einen Schenkel in Drehrichtung des Kommutators (10) miteinander fluchten und parallel zueinander ausgerichtet sind und die anderen Schenkel in Umfangsrichtung des Kommutators (10) im Parallelabstand zueinander verlaufen.

10. Kommutierungsvorrichtung nach einem der Ansprüche 1 - 7, **dadurch gekennzeichnet, daß** die Bürstenkörper (15, 16) im Querschnitt so gestaltet sind, daß die sich an ihren kommutatorseitigen Stirnenden ausbildenden Kontaktflächen (24^{IV}, 25^{IV}) die Form eines rechtwinkligen Dreiecks aufweisen, und im Bürstenhalter (20) so ausgerichtet sind, daß zwei parallel zueinander verlaufende Katheten der Kontaktflächen (24^{IV}, 25^{IV}) sich in und zwei parallel zueinander verlaufende Katheten der Kontaktflächen (24^{IV}, 25^{IV}) sich quer zur Drehrichtung des Kommutators (10) erstrecken und die Hypothenusen der Kontaktflächen (24^{IV}, 25^{IV}) mit geringem Abstand parallel zueinander verlaufen.

## Claims

1. Commutation apparatus for an electrical machine, in particular for a direct-current motor in motor vehicles, having a commutator (10) which has a commutator segment assembly comprising a multiplicity of commutator laminates (13) which are arranged in a row, insulated, in the circumferential direction, and having at least two brushes (14) which are arranged essentially diametrically opposite on the commutator (10), and each of which comprises two autonomous brush bodies (15, 16) which are electrically conductively connected to one another and form contact surfaces (24, 25; 24"', 25"'; 24^{IV}, 25^{IV}), which rest on the commutator laminates (13) with a force fit at their commutator-side ends, for the current flow between the brush bodies (15, 16) and the commutator laminates (13), **characterized in that** the brush bodies (15, 16) are arranged such that the centroids (26, 27) of their two contact surfaces (24, 25; 24"', 25"'; 24^{IV}, 25^{IV}) are offset relative to one another both in the circumferential direction and in the axial direction of the commutator (10), wherein the contact surfaces (24, 25) overlap one another in the circumferential direction of the commutator (10).

2. Commutation apparatus according to Claim 1, **characterized in that** the brush bodies (15, 16) are arranged such that their contact surfaces (24"', 25"'; 24^{IV}, 25^{IV}) follow one another at a distance in the circumferential direction of the commutator (10).

3. Commutation apparatus according to Claim 2, **characterized in that** the brush bodies (15, 16) are arranged such that their contact surfaces (24"', 25"'; 24^{IV}, 25^{IV}) which follow one another in the circumferential direction of the commutator (10) are aligned with one another.

4. Commutation apparatus according to one of Claims 1-3, **characterized in that** the brush bodies (15, 16) are connected to one another by an electrically conductive braid (17).

5. Commutation apparatus according to one of Claims 1-4, **characterized in that** the brush bodies (15, 16) are arranged such that their longitudinal axes (151, 161) run parallel to one another.

6. Commutation apparatus according to one of Claims 1-4, **characterized in that** the brush bodies (15, 16) are arranged such that their longitudinal axes (151, 161) are aligned radially with respect to the commutator axis and include an acute angle (β) between them.

7. Commutation apparatus according to one of Claims 1-6, **characterized in that** each brush body (15, 16) is guided so that it can move longitudinally in a tubular brush holder (18, 19), and a brush contact spring (22, 23) applies a spring force, directed towards the commutator (10), to the end face of the brush body (15, 16) that is remote from the commutator (10) .

8. Commutation apparatus according to one of Claims 1-7, **characterized in that** the brush bodies (15, 16) have a cross section such that the contact surfaces (24, 25) which are formed at their ends on the commutator side have a rectangular shape with longitudinal edges parallel to the commutator axis.

9. Commutation apparatus according to one of Claims 1-7, **characterized in that** the brush bodies (15, 16) have a cross section such that the contact surfaces (24"', 25"') which are formed at their ends on the commutator side have an L-shape or angled shape with two limbs, **in that** the first limbs are aligned with one another in the rotation direction of the commutator (10) and are aligned parallel to one another, and the other limbs run parallel but at a distance from one another in the circumferential direction of the commutator (10).

10. Commutation apparatus according to one of Claims 1-7, **characterized in that** the brush bodies (15, 16) have a cross section such that the contact surfaces (24^{IV}, 25^{IV}) which are formed at their ends on the commutator side are in the form of a right-angled triangle and are aligned in the brush holder (20) such that two catheti of the contact surfaces (24^{IV}, 25^{IV}) which run parallel to one another extend in the rotation direction of the commutator (10), and two catheti of the contact surfaces (24^{IV}, 25^{IV}) which run parallel to one another extend transversely with respect to the rotation direction of the commutator (10), and the hypotenuses of the contact surfaces (24^{IV}, 25^{IV}) run parallel to one another, a short distance apart.

## Revendications

1. Dispositif de commutation pour une machine électrique, en particulier pour un moteur à courant continu de véhicule automobile, présentent :
un commutateur (10) doté d'une garniture de commutateur constituée de plusieurs lamelles de commutateur (13) isolées les unes des autres et rangées les unes contre les autres suivant la périphérie et
au moins deux balais (14) disposés en position essentiellement diamétralement opposée sur le commutateur (10), tous deux formés de deux corps de balai (15, 16) autonomes reliés l'un à l'autre de manière électriquement conductrice et formant sur leur extrémité frontale située côté commutateur des surfaces de contact (24, 25; 24"', 25"'; 24^{IV}, 25^{IV}) reposant sur les lamelles de commutateur (13) pour permettre l'établissement d'un courant entre les corps de balai (15, 16) et les lamelles de commutateur (13),
**caractérisé en ce que**
les corps de balai (15, 16) sont disposés de telle sorte que les barycentres (26, 27) de leurs deux surfaces de contact (24, 25; 24"', 25"'; 24^{IV}, 25^{IV}) sont décalés l'un par rapport à l'autre à la fois suivant la périphérie et dans la direction axiale du commutateur (10) et
**en ce que** les surfaces de contact (24, 25) se superposent mutuellement suivant la périphérie du commutateur (10).

2. Dispositif de commutation selon la revendication 1, **caractérisé en ce que** les corps de balai (15, 16) sont disposés de telle sorte que leurs surfaces de contact (24"', 25"'; 24^{IV}, 25^{IV}) se suivent à distance l'une de l'autre suivant la périphérie du commutateur (10).

3. Dispositif de commutation selon la revendication 2, **caractérisé en ce que** les corps de balai (15, 16) sont disposés de telle sorte que leurs surfaces de contact successives (24"', 25"'; 24^{IV,} 25^{IV}) sont alignées les unes sur les autres suivant la périphérie du commutateur (10).

4. Dispositif de commutation selon l'une des revendications 1 à 3, **caractérisé en ce que** les corps de balai (15, 16) sont reliés mutuellement par une tresse électriquement conductrice (17).

5. Dispositif de commutation selon l'une des revendications 1 à 4, **caractérisé en ce que** les corps de balai (15, 16) sont disposés de telle sorte que leurs axes longitudinaux (151, 161) s'étendent parallèlement l'un à l'autre.

6. Dispositif de commutation selon l'une des revendications 1 à 4, **caractérisé en ce que** les corps de balai (15, 16) sont disposés de telle sorte que leurs axes longitudinaux (151, 161) sont orientés radialement par rapport à l'axe du commutateur et forment entre eux un angle aigu (β).

7. Dispositif de commutation selon l'une des revendications 1 à 6, **caractérisé en ce que** chaque corps de balai (15, 16) est guidé à coulissement longitudinal dans un porte-balai tubulaire (18, 19) et **en ce qu'**une force élastique orientée en direction du commutateur (10) est appliquée par un ressort (22, 23) de poussée de balai sur son côté frontal non tourné vers le commutateur (10).

8. Dispositif de commutation selon l'une des revendications 1 à 7, **caractérisé en ce que** les corps de balai (15, 16) ont une section transversale configurée de telle sorte que les surfaces de contact (24, 25) qui forment leur extrémité frontale du côté du commutateur présentent la forme d'un rectangle dont les côtés longitudinaux sont parallèles à l'axe du commutateur.

9. Dispositif de commutation selon l'une des revendications 1 à 7, **caractérisé en ce que** les corps de balai (15, 16) ont une section transversale configurée de telle sorte que les surfaces de contact (24"', 25"') qui forment leur extrémité frontale du côté du commutateur ont une forme en L ou une forme coudée à deux branches, **en ce que** les premières de ces branches sont orientées parallèlement l'une à l'autre et alignées dans le sens de rotation du commutateur (10) et **en ce que** les autres branches s'étendent suivant la périphérie du commutateur (10) et sont écartées parallèlement les unes des autres.

10. Dispositif de commutation selon l'une des revendications 1 à 7, **caractérisé en ce que** les corps de balai (15, 16) ont une section transversale configurée de telle sorte que les surfaces de contact (24^{IV}, 25^{IV}) qui forment leur surface frontale située du côté du commutateur présentent la forme d'un triangle rectangle et sont orientées dans le porte-balai (20) de telle sorte que deux cathètes mutuellement parallèles des surfaces de contact (24^{IV}, 25^{IV}) s'étendent dans le sens de rotation du commutateur (10) et que deux cathètes mutuellement parallèles des surfaces de contact (24^{IV}, 25^{IV}) s'étendent transversalement par rapport au sens de rotation du commutateur (10), les hypothénuses des surfaces de contact (24^{IV}, 25^{IV}) s'étendant parallèlement l'une à l'autre à petite distance mutuelle.
